# EUROPEAN PATENT SPECIFICATION

(11) **EP 1 391 690 B1**
(45) Date of publication and mention of the grant of the patent: **01.07.2015**
(21) Application number: 03447209.2
(22) Date of filing: 12.08.2003
(51) Int. Cl.: G01B 11/25, G01B 11/00

(54) **Optical probe for measuring features of an object and methods therefor**
Optischer Messkopf zum Erfassen von Eigenschaften eines Objekts sowie Verfahren hierzu
Tête de mesure optique destinée à déterminer des caractéristiques d'un objet et procédé correspondant

(30) Priority: 14.08.2002 EP 02447154
(43) Date of publication of application: 25.02.2004
(73) Proprietor: 3D SCANNERS LTD, Castle Donington Derby DE74 2SA (GB)
(72) Inventor: Van Coppenolle, Bart, 3210 Linden (BE); De Jonge, Lieven, 3090 Overijse (BE); Vallons, Kris, 3200 Aarschot (BE); Thys, Frank, 2830 Willebroek (BE)
(74) Representative: Gyi, Jeffrey Ivan

(56) References cited:
- EP-A- 0 305 107
- WO-A-01/86227
- WO-A-91/08439
- US-A- 4 515 479
- US-A- 5 774 220
- US-A1- 2001 040 683

## Description

### Field of the invention

The present invention relates to the field of optical scanning technology. One aspect the present invention relates to an optical probe optionally for use on a localizer. Another, the present invention relates to a method for scanning an object using the optical probe according to the invention, optionally connected to a localizer.

### Background of the invention

In order to optically measure the position and the dimensions of features in industrial objects such as holes, slots, edges or gap and flush, different solutions presently exist. For example, there are dedicated measuring machines such as profile projectors. However, these machines lack flexibility and measuring speed. There are also machines, generally defined as localizers, capable of positioning and orienting an optical probe in three-dimensional space. The localizer records the position and orientation of the probe with a position-dependent accuracy. These localizers can be, for example, coordinate measuring machines, articulated arms, robots or machining centers. Various optical probes may be mounted on these localizers such as video probes, laser scanners or probes with fringe or pattern projection. All these probes use analogue or digital cameras; most have a CCD-array that is one-dimensional, (*i.e*. line), or two-dimensional, *(i.e.* matrix) for receiving the light returning from the object being measured, said light having passed through a series of optics.

One example of a probe of the art is a video probe, which, by back and/or front lighting an object uses image processing to measure a feature of an object. Video probes are basically two-dimensional probes; the third dimension is derived from the auto focus optics, if available. They are quite inaccurate and are not suited for highly curved three-dimensional parts.

Almost all probes that project light and capture all or part of the returning light use triangulation to determine the shape of the object, and to generate a point cloud therefrom. In the triangulation scheme, one or more light sources project light of a certain pattern and in a certain direction onto the object. Viewing optics orientated in certain viewing directions capture the returning light and bring it through one or more optical paths to one or more receivers, such as an analogue or digital camera.

The light projected from an optical probe might originate from one or more 'projection directions'. For example, where the projected light originates from a discrete projection point, area or volume onto the object, the projected light is referred to as having a single projection direction. Where a probe has two projection directions, the projected light is emitted from two different projection points, areas or volumes in the probe, onto the object. A multiplicity of projection directions requires a corresponding number of projection points, areas or volumes in the probe.

The projected light might form a pattern on the object such as a point, a line, several parallel or intersecting lines, concentric circles, grid of points etc. Many patterns of light are possible and of different complexity. The pattern might become distorted on the object due to the relief of the object and the angle of the probe relative to the object. The undistorted pattern projected from a projection direction is known as the 'pattern direction' and is defined as the pattern direction formed on a flat surface that is orthogonal to the projection direction. Thus, a probe projecting light from two projection direction will have two pattern directions. A multiplicity of pattern directions requires a corresponding number of projection directions in the probe.

A probe having a single point, area or volume therein from which to accept light returning from the object is referred to as having a single 'viewing direction'. The point, area or volume in practice might be a CCD camera, a single set of receiving lenses, a single set of mirrors. Where the probe accepts light returning from the object from two different directions, it is referred to as having two viewing directions. In practice, a probe having two viewing directions might have two CCD cameras placed slightly apart, or it might have an arrangement of mirrors and/or lenses which direct light from the object from two different points in the probe onto a single CCD camera.

Probes of the prior art which are mounted on a localizer have a single light source, one or two viewing directions, one projection direction and a line, fringes or black-white stripes in the pattern direction for moiré analysis; these probes are inaccurate, and when they are used for measuring features in objects, they are slow and have to be reoriented several times by the localizer in order to measure the features properly. The best accuracy is reached when the lines in the pattern direction are orthogonal to the edges in the object. This rule implies that a hole or circle requires at least two orthogonal sets of stripes in the pattern. The scanning would require a set of translational movements of the probe to cover the complete circle-which would be slow, or a 90° rotational movement of the probe - which would require the user to modify localizers capable of translational movements only by inserting a device capable of movement about one or two rotary axes; such devices are inserted between the localizer head and the probe. These rotary axes may be indexed or continuous. In both cases, translational and/or rotational movements of the probe required to scan a hole or circle are mechanically complicated.

Laser scanners project laser light and have a single pattern direction and one or more viewing directions, usually two CCD-cameras to receive the returning light. With respect to the laser scanner itself, the pattern can be formed by a laser point that is stationary (point laser scanner), or has a linear (line laser scanner) or a circular (circle laser scanner) movement. Other line laser scanners generate a laser line on the object without any moving or rotating parts in the probe itself, mostly by using a cylindrical lens in the laser optics. Most of these scanners are used for digitizing full objects and are relatively accurate. The use of two or more viewing directions in some laser scanners, reduces the chances of line of sight between the receiving optics and the part of the object that is highlighted by the laser becoming blocked by a part of the object itself during scanning. All receiving and emitting optical paths are usually positioned on one line or in one plane.

If a line laser scanner is used for measuring features in objects, ideally the laser line should be orthogonal to the feature itself. This implies that translational movements of the line laser scanner made by the localizer in general are not by themselves sufficient to accurately measure the feature; rotational movements of the scanner would be necessary. For example, a feature with a curved edge will generate translational and rotational movements of the scanner to keep the laser line orthogonal to the edge during measurement. For localizers with translational axes only, this is done by inserting a device capable of one or two rotary movements, either indexed or continuous axes, just before the laser scanner. However, and as already mentioned above, the approach comprising translational and rotational movements of the laser scanner is mechanically complicated.

To avoid the mechanical complicated arrangement, some optical scanners comprise multiple projection directions and only one viewing direction. Alternatively, some have one projection direction that has a suitable pattern (like a crossing lines) and multiple viewing directions. Furthermore, some optical scanners of the art project pattern directions simultaneously, and analyse the patterns so-projected as one image. Due the limited depth of view of the optical arrangement in the viewing direction it is difficult to obtain an accurate image of all the projected patterns simultaneously with only one viewing direction. If one projection direction with a complex pattern is used, it is difficult to achieve a good accuracy of feature measurement, even with multiple viewing directions over the complete pattern.

It is known from the documents WO 91/08439, US 20011/0040683, US 5,774,220, EP 0305107, WO 01/86227 and US 5,515,479 to measure features of an object by projecting lines in projection directions and using a plurality of optics for accepting the returning light in viewing directions.

Therefore, there remains a need from the prior art for an easier and improved optical probe for scanning and measuring the features in an object, and methods therefor. The present invention provides an optical probe and methods, which overcome the difficulties and drawbacks of the presently known optical probes and methods.

### Summary of the invention

The present invention provides a method according to independent claim 1. Claim 1 defines a method for measuring the features of an object using an optical probe which comprises: one or more light sources generating, through one or more optics, two or more patterns each projected in a different projection direction, two or more optics for accepting the light returning from patterns projected on said object, each optic having a different viewing direction, one or more detectors for receiving light returning through said optics for accepting light returning from said pattern, said method comprising the steps: a) configuring said optical probe into two or more optical groups, wherein an optical group comprises one or more of the viewing directions and one or more of the projection directions, and wherein at least one viewing direction and at least one projection direction is different between the optical groups, wherein data obtained by the viewing directions is generated only from patterns projected by the projection directions of the same optical group, wherein each optical group consists of one line pattern direction projected through one projection direction and one or more viewing directions, wherein: the number of optical groups is two and said line patterns directions cross each other orthogonally with a maximum deviation of 20 degrees, or the number of optical groups is three and said line patterns cross each other two by two with an angle of 120 ± 20 degrees, or wherein the number of projection directions is four and every said line pattern is parallel to one other said line pattern with a maximum deviation of 20 degrees, and orthogonal to the two other line patterns with a maximum deviation of 20 degrees, b) collecting data from each optical group while scanning the object, and c) obtaining a measurement of the features of said object from the data of step b).

Another embodiment of the present invention is a method as described above wherein each said optical group of said optical probe has part of its one dimensional, two dimensional or three dimensional working volume common with the one dimensional, two dimensional or three dimensional working volume of another optical group.

Another embodiment of the present invention is a method as described above wherein light is projected from one optical group at a time.

Another embodiment of the present invention is a method as described above wherein projected light from one optical group has a strobing frequency that different from light projected from one or more other optical groups.

The present invention further provides an apparatus according to independent claim 5. Claim 5 defines an optical probe suitable for measuring the features of an object comprising: one or more light sources generating, through one or more optics, two or more patterns each projected in a different projection direction, two or more optics for accepting the light returning from patterns projected on said object, each optic having a different viewing direction, one or more detectors for receiving light returning through said optics for accepting light returning from said pattern, wherein said optical probe is configured into two or more optical groups, wherein an optical group comprises one or more of the viewing directions and one or more of the projection directions, and wherein at least one viewing direction and at least one projection direction is different between the optical groups, wherein data obtained by the viewing directions is generated only from patterns projected by the projection directions of the same optical group, wherein each optical group consists of one line pattern direction projected through one projection direction and one or more viewing directions, wherein: the number of optical groups is two and said line patterns directions cross each other orthogonally with a maximum deviation of 20 degrees, or the number of optical groups is three and said line patterns cross each other two by two with an angle of 120 ± 20 degrees, or the number of projection directions is four and every said line pattern is parallel to one other said line pattern with a maximum deviation of 20 degrees, and orthogonal to the two other line patterns with a maximum deviation of 20 degrees.

Another embodiment of the present invention is an optical probe as described above wherein said detectors receiving said returning light are CCD cameras positioned in said probe according to the Scheimpflug principle.

Another embodiment of the present invention is an optical probe as described above, comprising one CCD camera.

Another embodiment of the present invention is an optical probe as described above comprising a mounting suitable for connection to a localizer for positioning and orienting the optical probe.

Another embodiment of the present invention is an optical probe as described above wherein said mounting enables position-repeatable coupling and decoupling of the probe to said localizer.

Another embodiment of the present invention is an optical probe as described above, further comprising a localizer for positioning and orientating said optical probe in a one-, two-or three-dimensional working volume.

Another embodiment of the present invention is an optical probe as described above wherein said localizer is capable of one more rotational and/or one or more translational axes of movement.

The present invention further provides a method for measuring the features of an object comprising the use of an optical probe according to claim 5.

### Detailed description of the invention

The inventors have found that an optical probe comprising two of more projection directions and two or more viewing direction provides an unexpected increase in the accuracy and speed of measuring the features of an object.

By measuring the features of an object is meant herein obtaining data enabling the dimensions to be determined of the features of an object. The features may be any change in the relief of the surface of an object such as hole(s), slot(s), edge(s), gap(s), groove(s), flush(s), step(s), protrusion(s), bump(s), etc. The data may be in the form of known in the art such as, but not limited to, a point cloud, a list of measurements, a look-up table, a data set suitable for interpretation by a computer, a set of data for use internally by a scanner. The features may be one or more features. The object may be one or more objects. The measurement of the features of an object may be of the complete object, a part of the object containing a feature, or several parts of the object, each part containing one or more features.

Optics as used herein refers to a means for directing light from a source to a target. The source might be, for example, a laser and the target might be the object to be scanned. Alternatively, the source might be the illuminated object to be scanned, and the target might be a CCD camera. The means for directing light can be any known in the art and includes, but is not limited to one or more of holes, tubes, lenses, mirrors, prisms, fibre optics etc.

Detectors according to the invention are any that are capable of detecting the intensity of projected light in one dimension (e.g. a straight line) or two dimensions *(e.g.* a matrix). The light can be of any wavelength including that of the visible spectrum, infrared and ultraviolet. The detector might be, for example, a CCD camera.

The inventors have further found that by introducing the notion of 'optical groups' into a method for measuring the features of an object, the accuracy and speed improvements are greater still.

An optical group is a set of projection directions and viewing directions wherein the viewing directions generate data only for the projection directions of the same optical group. For example, an optical group may comprise one projection direction (e.g. one laser projecting a pattern) and one viewing direction (e.g. one CCD camera). An optical probe according to the invention may comprise two different optical groups e.g. two pairs of laser/CCDs wherein the position of the laser and CCD is different in each pair, and the data obtained from one CCD contains only information about the pattern projected by laser in the same optical group, and no information regarding the pattern projected by the laser belonging to the other optical group.

An optical group is not limited to one projection direction and one viewing direction, but may comprise more than one projection direction and more than one viewing direction. According to the invention, an optical probe is not limited to two optical groups, but may comprise more than two optical groups. Optical probes of the art typically have one optical group, which might consist of a laser line scanner projecting a laser line (1 projection direction) which is viewed from two cameras (2 viewing direction) positioned on opposite sides of the laser line. As already pointed out above, said the arrangement of lasers and camera of the art is limited and requires complicated movements of the localiser and/or requires an additional device to enable complex rotational movements of the probe.

When using the optical probe according to the invention with more than one projection direction and more than one viewing direction, more complex measuring tasks such as the measurement of holes and slots can be undertaken more easily the before. By combining different viewing directions and projection directions a complex feature can be measured with a higher efficiency and a higher accuracy than before.

Any optical probe comprising more than one projection directions and more than one viewing directions may be configured into two or more optical groups. Methods to so configure an optical probe according to the invention are known in the art.

The scanning procedure refers to the movement of the optical probe across the surfaces of the object by a localizer in order to obtain a measurement of the features of an object. Alternatively, the scanning procedure refers to the movement of the surface of the object across the optical probe by a localizer in order to obtain a measurement of the features of an object. Such scanning procedures are well known in the art, and methods are known to move the probe or object relative to each other.

According to one aspect of the invention the collection of data from each optical group occurs with the probe and object held in the same orientation with respect of one another. Once data has been generated for each optical group for a particular relative orientation of probe and object, the localizer may move either object or optical probe to obtain the next set of readings.

According to an aspect of the invention, the movement of the localizer can be a translation or a rotation, or a combination of both. Part of the translation axes and part of the rotation axes have continuous movement; the rest may have indexed movement. In indexed mode, the movements of the localizer are discrete. In continuous mode, the movements are not discrete

According to one aspect of the invention, all the projection directions of the respective optical groups are different. According to one aspect of the invention, at least one projection direction of an optical group is different is different from the projection directions of at least one other optical group.

According to one aspect of the invention, all the viewing directions of the respective optical groups are different. According to the invention, at least one viewing direction is different from the viewing directions of at least one other optical group

By having at least one different projection direction and viewing direction different between the optical groups, each optical group can be optimized for a certain part of the measurement task. This novel and inventive approach to optical measurement makes it possible to create optical scanners that contain different optical groups each optimized for speed and accuracy.

It is an aspect of the invention that the method and device may be used to measure a whole object. It is an aspect of the invention that the method and device may be used to measure a part of an object. It is an aspect of the invention that the method and device may be used just to measure the features of an object. It is an aspect of the invention that the method and device may be used to measure the features of an object, and other methods and the same device are used to measure the parts of the object devoid of features.

It is an aspect of the invention that data obtained from one optical group is not 'contaminated' with data arising from a pattern projected from another optical group. Ways to achieve a data set that is pure for an optical group may be any that is known in the art or any future method.

For example, one optical group might project a pattern for a short period, during which time, light returning from the object is measured along the view directions of the same group; the projections of other optical groups are turned off during measurement. Then a second optical group may project a pattern from a different projection direction for a short period, during which time, light returning from the object is measured along the view directions of the second optical group; the projections of other optical groups are turned off during measurement. The projections and measurements are sequentially performed for each optical groups in sequence until data has been obtained for each optical group.

Another method of restricting the capture of data to each optical group is, for example to use wavelengths of light that are different for each projection direction. This would allow the simultaneous projection all projection directions, and each projection direction (and hence optical groups) may be discerned by the detectors on the basis of wavelength.

Another method of restricting the capture of data to each optical group is, for example, to use light of different strobing frequency for each projection direction. This would again allow the simultaneous projection all projection directions, and each projection direction (and hence optical groups) may be discerned by the detectors on the basis of the frequency of strobing.

In another embodiment of the present invention, the working volumes of the optical groups overlap for a certain part of their working volumes. For example, the area of the surface scanned by the pattern and/or the area of the surface detected by the camera overlap for two or more optical groups. In this overlap area, the ideal measurement conditions can be created for each object to be measured.

In one embodiment of the invention, two optical groups each project a line pattern from a single projection direction, and the line pattern from each projection direction crosses the other orthogonally, with a maximum deviation of 20 degrees.

In another embodiment of the invention, three optical groups, each project a line pattern from a single projection direction, and the line pattern from each projection direction crosses one or more other lines at an angle 120 degrees with a maximum deviation of 20 degrees.

In another embodiment of the present invention, the receiving optics for each laser line consists of two different optical paths. The optics are positioned as such in the probe that they are opposite to each other with respect to the laser line in question. In this way the chance that a part of the object blocks the line of sight between the projected laser line on the object and the receiving optics is reduced by 50%.

As mentioned above, use of the optical probe and methods according to the invention can simplify the movements of the localizes. Due to the design of the probe according to the invention, the number indexed rotations is minimised, and most of time the said rotations are limited to occurring between measurements and not during measurements. Furthermore, an indexable rotary head between the scanner and localizer, or as part of the localizer is mechanically less complicated than a continuous rotary head. For certain localizers, for example the co-ordinate measuring machines, this indexable rotary head is even an industry standard. Therefore, the invention provides a greatly simplified method and device for measuring the features of an object.

Another major improvement over the prior art according to the invention relates to a major reduction in measurement time. With an optical probe and methods according to the invention a feature can be measured in one sweep, while a conventional line scanner would have to cover the feature twice; scanning the feature a second time after rotating the optical probe.

Another advantage of the present invention is that the use of the line laser scanning principle is accurate, for both digitizing and for feature measurement.

In another embodiment, the present invention relates to an optical probe, wherein said cameras receiving the returning light are positioned in the probe according to the Schweimpflug principle. As known by one of skill in the art, the Schweimpflug principle provides guidance on how a camera lens should be tilted when focusing upon a plane that is not parallel to the film, as explained in the GB patent No 1196 and Harold M (1996), Scheimpflug's Patent, Merklinger, Photo Techniques. The Scheimpflug principle states that the object (film) plane, the subject plane (plane of sharp focus), and lens plane (the plane through the optical center and perpendicular to the lens axis) must converge along a single line.

In another preferred embodiment, one camera is used.

The optical probe may further comprise a mounting for coupling with a localizer. Said mounting may be any that allows the optical probe to be held and moved by the localiser. The mounting may be of a design that allows convenient connection to a reciprocal mounting on the localiser. The mounting may allow the transmission of translational and rotational movements from the localizer to the optical probe. It may also allow electrical contacts to be made with the localizer, for the purpose of, for example, the supply of power, the transmission of data, connection of fibre optics. The mounting may also allow fast and position-repeatable coupling and decoupling of the probe to the localiser. An example of a mounting according to the invention is a Renishaw Autojoint. The Renishaw Autojoint allows the coupling and decoupling of the probe to the localiser with one simple turn of a screw accessible from the outside in the mounting the coupling/decoupling. By having 3 pairs of small spheres at one side of the Autojoint and 3 corresponding spheres at the other side, the position of the probe may be repeatedly aligned with the localiser.

The optical probe may further comprise a localizer. Said localizer may enable the translational and rotational movements from the localizer to the optical probe.

In another embodiment of the present invention the optical probe is not attached to a localizer.

The invention provides an easy and time-effective scanning method by using the optical probe according to the invention.

The data obtained from each optical group may be transformed into a data form that indicates the measurement of the features of the object (e.g. a point cloud, a list of measurements, a look-up table, a data set suitable for interpretation by a computer, a set of data for use internally by a scanner) using calculation routines known in the art.

The probe and localizer may be calibrated-only, or simultaneously calibrated and qualified according to the method disclosed in EP 1361414.

The data obtained from each optical group may be transformed into a data form that indicates the measurement of the features of the object (e.g. a point cloud, a list of measurements, a look-up table, a data set suitable for interpretation by a computer, a set of data for use internally by a scanner) using the procedures disclosed in EP 1361414.

The data obtained from each optical group may be transformed into a data form that indicates the measurement of the features of the object (e.g. a point cloud, a list of measurements, a look-up table, a data set suitable for interpretation by a computer, a set of data for use internally by a scanner) using a method comprising the steps:
a) scanning the object and obtaining readings from the receiver(s) in the optical probe,
b) converting the readings to points or measurements in the working space of the receiver itself,
c) using the calibration of the probe to convert the points or measurements to points or measurements in the coordinate frame of the optical probe itself.
d) if the optical probe is connected to a localizer, using the qualification to convert these points or measurements in the coordinate frame of the localizer.

In step a), the readings may be of any form known to the skilled artisan, for example bit-mapped intensities, or bit-mapped black/white indicators if a CCD camera is used.
In step b) the working space of the receiver may be one dimensional, two dimensional or three dimensional and may preferably be measured in pixel values .
In step c) the calibration of the probe may be obtained by any known in the art, or according to the method disclosed in EP 1361414. The coordinate frame of the optical probe itself may be measured in millimeters/inches SI units.
In step d) the qualification of the localizer/probe may be performed by any known in the art, or according to the method disclosed in EP 1361414.

### FIGURES

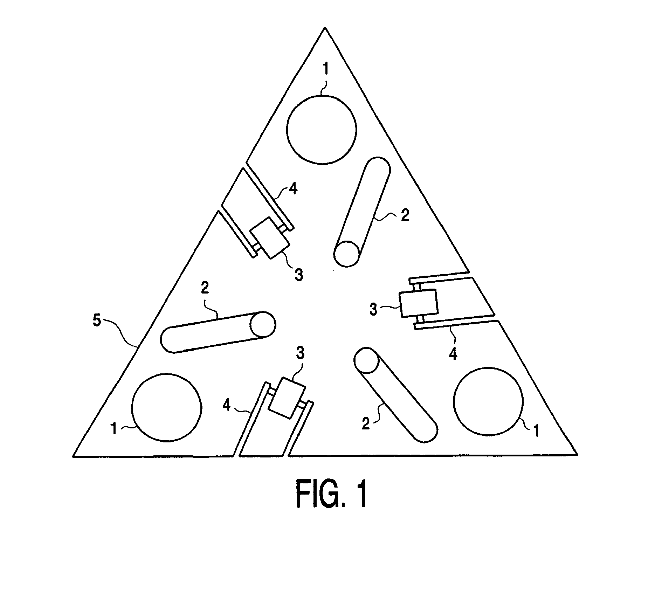

**Figure 1** is a schematic illustration of an example of an optical probe according to one aspect of the invention. The probe comprises a housing, the outline of which is shown **5**. Three detectors with optics **1**, are positioned at different locations in the probe, such that each has a different viewing direction. The detectors and/or optics may each be placed at a suitable tilt angle so that the light achieves maximum focus across the whole plane of the image. Three lasers **2** each project light onto a mirror assembly **3**, **4**. The mirror assembly comprises a mirror **3** and a mounting device **4** which oscillates the mirror such that the single point of light emitted by the laser is projected from the probe as a line. Each of the three mirrors reflect the laser light from probe in a different projection direction.

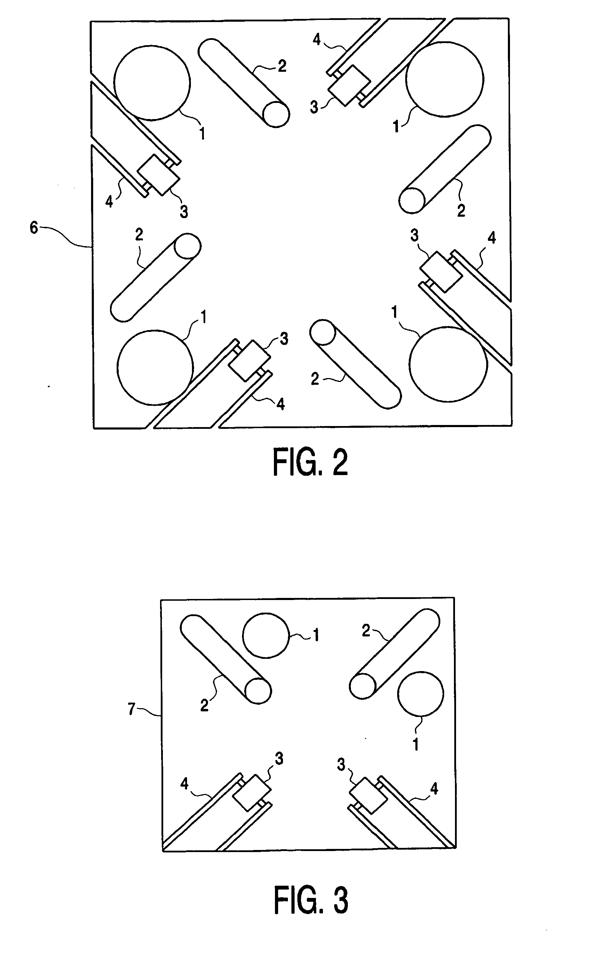

**Figure 2** is a schematic illustration of an example of an optical probe according to one aspect of the invention. The probe comprises similar components to that of Figure 1, except the probe comprises four pairs of projection and viewing directions. The probe comprises a housing, the outline of which is shown **6**. Four detectors with optics **1**, are positioned at different locations in the probe, such that each has a different viewing direction. The detectors and/or optics may each be placed at a suitable tilt angle so that the light achieves maximum focus across the whole plane of the image. Four lasers **2** each project light onto a mirror assembly **3, 4**. The mirror assembly comprises a mirror **3** and a mounting device **4** which oscillates the mirror such that the single point of light emitted by the laser is projected from the probe as a line. Each of the four mirrors reflect the laser light from probe in a different projection direction.

**Figure 3** is a schematic illustration of an example of an optical probe according to one aspect of the invention. The probe comprises similar components to that of Figures 1 and 2, except the probe comprises two pairs of projection and viewing directions. The probe comprises a housing, the outline of which is shown **7**. Two detectors with optics **1**, are positioned at different locations in the probe, such that each has a different viewing direction. The detectors and/or optics may each be placed at a suitable tilt angle so that the light achieves maximum focus across the whole plane of the image. Two lasers **2** each project light onto a mirror assembly **3**, **4**. The mirror assembly comprises a mirror **3** and a mounting device **4** which oscillates the mirror such that the single point of light emitted by the laser is projected from the probe as a line. Each of the two mirrors reflect the laser light from probe in a different projection direction.

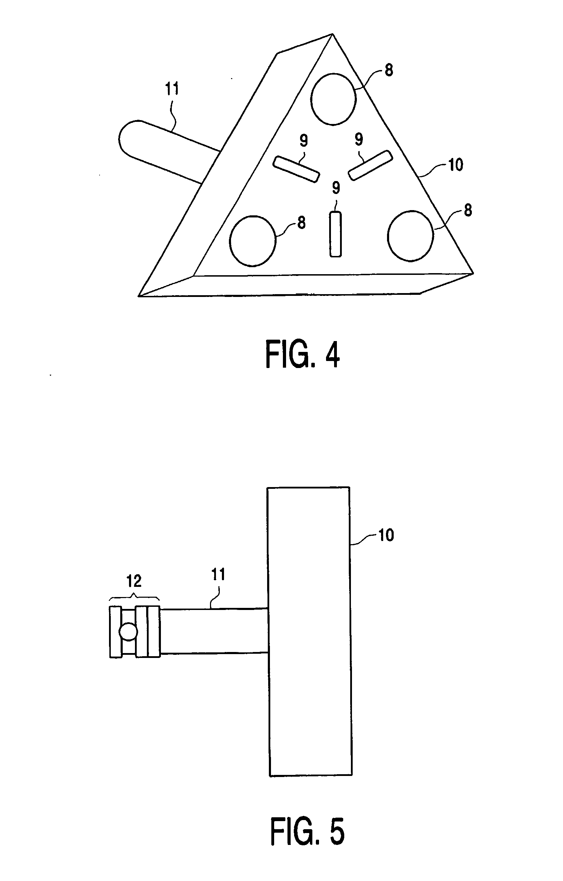

**Figure 4** is a schematic illustration of an example of an optical probe according to one aspect of the invention. Shown herein is a probe comprising three projections and viewing directions. Illustrated are optics for each of the three viewing directions **8**, slits **9** through which light is projected for each projection direction, the outer casing of the probe **10**, and a mounting **11** that allows the probe to be connected to a localiser.

**Figure 5** is a side-view of the probe according to Figure 4. Shown is the casing **10**, the shaft of the mounting **11** and a coupling **12** that allows the probe to be connected to a localiser.

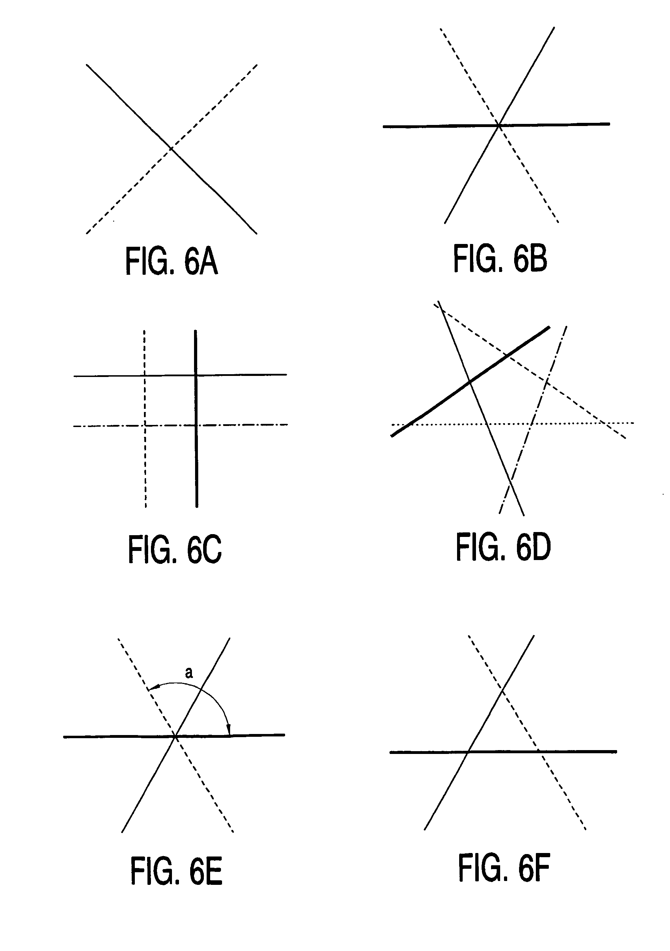

**Figure 6** shows examples of the types of pattern directions projected by a probe.
**Figure 6A** depicts a cross pattern direction of two lines, each from a different projection direction. One projection direction is a solid line, and the other projection direction is a hatched line.

**Figure 6B** depicts a cross pattern direction of three lines that all cross at the same point. One projection direction is a solid line, one projection direction is a hatched line, and the other projection direction is a thick line.
**Figure 6C** depicts a square pattern direction of four lines. One projection direction is a solid line, one projection direction is hatched line, one projection direction is a different hatched line, and the other projection direction is a thick line.
**Figure 6D** depicts a pentagon pattern direction of five lines. One projection direction is a solid line, one projection direction is hatched line, one projection direction is a different hatched line, one projection direction is a dotted line and the other projection direction is a thick line.
**Figure 6E** depicts a cross pattern direction of three lines that all cross at the same point. One projection direction is a solid line, one projection direction is a hatched line, and the other projection direction is a thick line. The angle formed by any two lines (e.g. angle a) may be determined according to the invention. Angle a may be, for example, 120 ± 10 deg.
**Figure 6F** depicts a triangular pattern direction three lines. One projection direction is a solid line, one projection direction is a hatched line, and the other projection direction is a thick line.

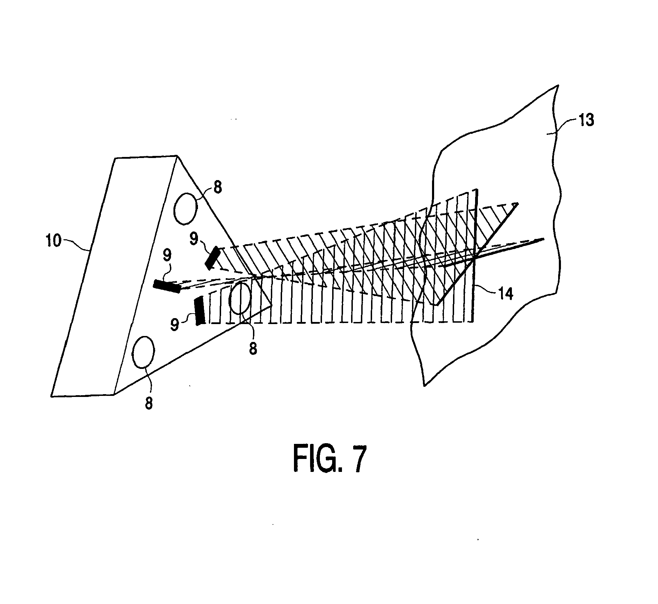

**Figure 7** shows a probe according to the invention projecting a cross shaped pattern direction onto an object to be scanned. The probe comprising three projections and viewing directions. Illustrated are optics for each of the three viewing directions **8**, slits **9** through which light is projected for each projection direction, and the outer casing of the probe **10**. The pattern **14** is projected onto an object **13**.

## Claims

1. A method for measuring the features of an object using an optical probe which comprises:
- one or more light sources (2) generating, through one or more optics (3,4), two or more patterns (14) each projected in a different projection direction,
- two or more optics (1) for accepting the light returning from patterns projected on said object, each optic having a different viewing direction,
- one or more detectors for receiving light returning through said optics for accepting light returning from said pattern,
said method comprising the steps:
a) configuring said optical probe into two or more optical groups,
- wherein an optical group comprises one or more of the viewing directions and one or more of the projection directions, and wherein at least one viewing direction and at least one projection direction is different between the optical groups,
- wherein data obtained by the viewing directions is generated only from patterns projected by the projection directions of the same optical group,
- wherein each optical group consists of one line pattern direction projected through one projection direction and one or more viewing directions,
- wherein:
- the number of optical groups is two and said line patterns directions cross each other orthogonally with a maximum deviation of 20 degrees, or
- the number of optical groups is three and said line patterns cross each other two by two with an angle of 120 ± 20 degrees,
or
- the number of projection directions is four and every said line pattern is parallel to one other said line pattern with a maximum deviation of 20 degrees, and orthogonal to the two other line patterns with a maximum deviation of 20 degrees,
b) collecting data from each optical group while scanning the object, and
c) obtaining a measurement of the features of said object from the data of step b).

2. Method according to claim 1 wherein each said optical group of said optical probe has part of its one dimensional, two dimensional or three dimensional working volume common with the one dimensional, two dimensional or three dimensional working volume of another optical group.

3. Method according to claim 1 or 2 wherein light is projected from one optical group at a time.

4. Method according to any of claims 1 to 3 wherein projected light from one optical group has a strobing frequency that different from light projected from one or more other optical groups.

5. An optical probe suitable for measuring the features of an object comprising:
- one or more light sources (2) for generating, through one or more optics (3,4), two or more patterns (14) each projected in a different projection direction,
- two or more optics (1) for accepting the light returning from patterns projected on said object, each optic having a different viewing direction,
- one or more detectors for receiving light returning through said optics for accepting light returning from said pattern,
wherein said optical probe is configured into two or more optical groups,
- wherein an optical group comprises one or more of the viewing directions and one or more of the projection directions, and wherein at least one viewing direction and at least one projection direction is different between the optical groups,
- wherein data obtained by the viewing directions is generated only from patterns projected by the projection directions of the same optical group,
- wherein each optical group consists of one line pattern direction projected through one projection direction and one or more viewing directions,
- wherein:
- the number of optical groups is two and said line patterns directions cross each other orthogonally with a maximum deviation of 20 degrees, or
- the number of optical groups is three and said line patterns cross each other two by two with an angle of 120 ± 20 degrees,
or
- the number of projection directions is four and every said line pattern is parallel to one other said line pattern with a maximum deviation of 20 degrees, and orthogonal to the two other line patterns with a maximum deviation of 20 degrees.

6. Optical probe according to claim 5 wherein said detectors receiving said returning light are CCD cameras positioned in said probe according to the Scheimpflug principle.

7. Optical probe according to claim 5 or 6, comprising one CCD camera.

8. Optical probe according to any of claims 5 to 7 comprising a mounting suitable for connection to a localizer for positioning and orienting the optical probe.

9. Optical probe according to claim 8 wherein said mounting enables position-repeatable coupling and decoupling of the probe to said localizer.

10. Optical probe according to any of claims 5 to 9, further comprising a localizer for positioning and orientating said optical probe in a one-, two-or three-dimensional working volume.

11. Optical probe according to claims 8 to 10 wherein said localizer is capable of one more rotational and/or one or more translational axes of movement.

12. Method for measuring the features of an object comprising the use of an optical probe according to claims 5 to 11.

## Patentansprüche

1. Verfahren zum Messen der Merkmale eines Objekts unter Verwendung eines optischen Messkopfs, der Folgendes umfasst:
- eine oder mehrere Lichtquellen (2), die durch eine oder mehrere Optiken (3, 4) zwei oder mehrere Muster (14) erzeugen, die jeweils in einer anderen Projektionsrichtung projiziert werden,
- zwei oder mehrere Optiken (1), um das Licht anzunehmen, das von den Mustern zurückkehrt, die auf das Objekt projiziert werden, wobei jede Optik eine andere Blickrichtung aufweist,
- einen oder mehrere Detektoren, um das Licht zu empfangen, das durch die Optiken zurückkehrt, um Licht anzunehmen, das von dem Muster zurückkehrt,
wobei das Verfahren folgende Schritte umfasst:
a) Konfigurieren des optischen Messkopfs in zwei oder mehrere optische Gruppen,
- wobei eine optische Gruppe eine oder mehrere der Blickrichtungen und eine oder mehrere der Projektionsrichtungen umfasst, und wobei mindestens eine Blickrichtung und mindestens eine Projektionsrichtung zwischen den optischen Gruppen unterschiedlich sind,
- wobei Daten, die von den Blickrichtungen erzielt werden, nur aus den Mustern erzeugt werden, die von den Projektionsrichtungen der gleichen optischen Gruppe projiziert werden,
- wobei jede optische Gruppe aus einer Linienmusterrichtung besteht, die in einer Projektionsrichtung und einer oder mehreren Blickrichtungen projiziert wird,
- wobei:
- die Anzahl von optischen Gruppen zwei beträgt, und sich die Linienmusterrichtungen gegenseitig orthogonal mit einer maximalen Abweichung von 20 Grad kreuzen, oder
- die Anzahl von optischen Gruppen drei beträgt, und sich die Linienmuster zu zweit in einem Winkel von 120 ± 20 Grad kreuzen, oder
- die Anzahl von Projektionsrichtungen vier beträgt, und jedes Linienmuster zu einem anderen Linienmuster mit einer maximalen Abweichung von 20 Grad parallel ist und zu den beiden anderen Linienmustern mit einer maximalen Abweichung von 20 Grad orthogonal ist,
b) Erheben von Daten von jeder optischen Gruppe während des Abtastens des Objekts, und
c) Erzielen einer Messung der Merkmale des Objekts aus den Daten von Schritt b).

2. Verfahren nach Anspruch 1, wobei jede optische Gruppe des optischen Messkopfs einen Teil ihres eindimensionalen, zweidimensionalen oder dreidimensionalen Arbeitsvolumens mit dem eindimensionalen, zweidimensionalen oder dreidimensionalen Arbeitsvolumen einer anderen optischen Gruppe gemeinsam hat.

3. Verfahren nach Anspruch 1 oder 2, wobei Licht von je einer optischen Gruppe auf einmal projiziert wird.

4. Verfahren nach einem der Ansprüche 1 bis 3, wobei das projizierte Licht von einer optischen Gruppe eine Stroboskopfrequenz aufweist, die anders als von Licht ist, das von einer oder mehreren anderen optischen Gruppen projiziert wird.

5. Optischer Messkopf, der geeignet ist, um die Merkmale eines Objekts zu messen, umfassend:
- eine oder mehrere Lichtquellen (2), um durch eine oder mehrere Optiken (3, 4) zwei oder mehrere Muster (14) zu erzeugen, die jeweils in einer anderen Projektionsrichtung projiziert werden,
- zwei oder mehrere Optiken (1), um das Licht anzunehmen, das von den Mustern zurückkehrt, die auf das Objekt projiziert werden, wobei jede Optik eine andere Blickrichtung aufweist,
- einen oder mehrere Detektoren, um das Licht zu empfangen, das durch die Optiken zurückkehrt, um Licht anzunehmen, das von dem Muster zurückkehrt,
wobei der optische Messkopf in zwei oder mehr optische Gruppen konfiguriert ist,
- wobei eine optische Gruppe eine oder mehrere der Blickrichtungen und eine oder mehrere der Projektionsrichtungen umfasst, und wobei mindestens eine Blickrichtung und mindestens eine Projektionsrichtung zwischen den optischen Gruppen unterschiedlich sind,
- wobei Daten, die von den Blickrichtungen erzielt werden, nur aus den Mustern erzeugt werden, die von den Projektionsrichtungen der gleichen optischen Gruppe projiziert werden,
- wobei jede optische Gruppe aus einer Linienmusterrichtung besteht, die in einer Projektionsrichtung und einer oder mehreren Blickrichtungen projiziert wird,
- wobei:
- die Anzahl von optischen Gruppen zwei beträgt, und sich die Linienmusterrichtungen gegenseitig orthogonal mit einer maximalen Abweichung von 20 Grad kreuzen, oder
- die Anzahl von optischen Gruppen drei beträgt, und sich die Linienmuster zu zweit in einem Winkel von 120 ± 20 Grad kreuzen, oder
- die Anzahl von Projektionsrichtungen vier beträgt, und jedes Linienmuster zu einem anderen Linienmuster mit einer maximalen Abweichung von 20 Grad parallel ist und zu den beiden anderen Linienmustern mit einer maximalen Abweichung von 20 Grad orthogonal ist.

6. Optischer Messkopf nach Anspruch 5, wobei die Detektoren, die das zurückkehrende Licht empfangen, CCD-Kameras sind, die in dem Messkopf gemäß der Scheimpflugschen Regel positioniert sind.

7. Optischer Messkopf nach Anspruch 5 oder 6, umfassend eine CCD-Kamera.

8. Optischer Messkopf nach einem der Ansprüche 5 bis 7, umfassend eine Halterung, die zum Anschluss an ein Lichtvisier zum Positionieren und Orientieren des optischen Messkopfs geeignet ist.

9. Optischer Messkopf nach Anspruch 8, wobei die Halterung ein positionswiederholbares Ankoppeln und Abkoppeln des Messkopfs an bzw. von dem Lichtvisier ermöglicht.

10. Optischer Messkopf nach einem der Ansprüche 5 bis 9, ferner umfassend ein Lichtvisier zum Positionieren und Orientieren des optischen Messkopfs in einem ein-, zwei- oder dreidimensionalen Arbeitsvolumen.

11. Optischer Messkopf nach Anspruch 8 bis 10, wobei das Lichtvisier zu einer oder mehreren Rotations- und/oder einer oder mehreren Translations-Bewegungsachsen fähig ist.

12. Verfahren zum Messen der Merkmale eines Objekts, umfassend die Verwendung eines optischen Messkopfs nach Anspruch 5 bis 11.

## Revendications

1. Procédé pour mesurer les caractéristiques d'un objet au moyen d'une tête de mesure optique qui comprend :
une ou plusieurs sources de lumière (2), générant, à travers un ou plusieurs dispositifs optiques (3, 4), deux, ou plus, motifs (14) chacun projeté dans une direction de projection différente,
deux, ou plus, dispositifs optiques (1), acceptant la lumière revenant des motifs projetés sur ledit objet, chaque dispositif optique ayant une direction de vue différente,
un ou plusieurs détecteurs pour recevoir la lumière revenant à travers lesdits dispositifs optiques pour accepter la lumière revenant dudit motif,
ledit procédé comprenant les étapes suivantes :
a) configurer ladite tête de mesure optique en deux, ou plus, groupes optiques,
où un groupe optique comprend une ou plusieurs des directions de vue et une ou plusieurs des directions de projection, et où au moins une direction de vue et au moins une direction de projection sont différentes entre les groupes optiques,
où des données obtenues par les directions de vue sont générées seulement à partir des motifs projetés selon les directions de projection du même groupe optique,
où chaque groupe optique se compose d'une direction de motif de ligne projetée à travers une direction de projection et une ou plusieurs directions de vue,
où :
le nombre de groupes optiques est deux, et lesdites directions de motifs de lignes se croisent de manière orthogonale avec une déviation maximale de 20 degrés, ou
le nombre de groupes optiques est trois, et lesdits motifs de lignes se croisent, deux par deux, avec un angle de 120±20 degrés, ou
le nombre de directions de projection est quatre, et chaque dit motif de lignes est parallèle à un autre dit motif de lignes avec une déviation maximale de 20 degrés, et orthogonal aux deux autres motifs de lignes avec une déviation maximale de 20 degrés,
b) collecter des données depuis chaque groupe optique au cours du balayage de l'objet, et
c) obtenir une mesure des caractéristiques dudit objet à partir des données de l'étape b).

2. Procédé selon la revendication 1, dans lequel chaque dit groupe optique de ladite tête de mesure optique a une partie de son volume de travail unidimensionnel, bidimensionnel ou tridimensionnel commun avec le volume de travail unidimensionnel, bidimensionnel ou tridimensionnel d'un autre groupe optique.

3. Procédé selon la revendication 1 ou la revendication 2, dans lequel une lumière est projetée depuis un groupe optique à la fois.

4. Procédé selon l'une quelconque des revendications 1 à 3, dans lequel une lumière projetée depuis un groupe optique a une fréquence stroboscopique qui est différente de la lumière projetée depuis un ou plusieurs autres groupes optiques.

5. Tête de mesure optique adaptée pour mesurer les caractéristiques d'un objet comprenant :
une ou plusieurs sources de lumière (2), pour générer, à travers un ou plusieurs dispositifs optiques (3, 4), deux, ou plus, motifs (14) chacun projeté dans une direction de projection différente,
deux, ou plus, dispositifs optiques (1), pour accepter la lumière revenant des motifs projetés sur ledit objet, chaque optique ayant une direction de vue différente,
un ou plusieurs détecteurs pour recevoir la lumière revenant à travers lesdits dispositifs optiques pour accepter la lumière revenant dudit motif,
où ladite tête de mesure optique est configurée en deux, ou plus, groupes optiques,
où un groupe optique comprend une ou plusieurs des directions de vue et une ou plusieurs des directions de projection, et où au moins une direction de vue et au moins une direction de projection sont différentes entre les groupes optiques,
où des données obtenues par les directions de vue sont générées seulement depuis des motifs projetés selon les directions de projection du même groupe optique,
où chaque groupe optique se compose d'une direction de motif de ligne projetée à travers une direction de projection et une ou plusieurs directions de vue,
où :
le nombre de groupes optiques est deux, et lesdites directions de motifs de lignes se croisent de manière orthogonale avec une déviation maximale de 20 degrés, ou
le nombre de groupes optiques est trois, et lesdits motifs de lignes se croisent, deux par deux, avec un angle de 120±20 degrés, ou
le nombre de directions de projection est quatre, et chaque dit motif de lignes est parallèle à un autre dit motif de lignes avec une déviation maximale de 20 degrés, et orthogonal aux deux autres motifs de lignes avec une déviation maximale de 20 degrés.

6. Tête de mesure optique selon la revendication 5, dans laquelle lesdits détecteurs recevant ladite lumière qui revient sont des caméras CCD positionnées dans ladite tête de mesure conformément au principe de Scheimpflug.

7. Tête de mesure optique selon la revendication 5 ou la revendication 6, comprenant une caméra CCD.

8. Tête de mesure optique selon l'une quelconque des revendications 5 à 7, comprenant un montage adapté pour une connexion à un localisateur pour positionner et orienter la tête de mesure optique.

9. Tête de mesure optique selon la revendication 8, dans laquelle ledit montage permet un couplage et un découplage à position répétable de la tête de mesure audit localisateur.

10. Tête de mesure optique selon l'une quelconque des revendications 5 à 9, comprenant en outre un localisateur pour positionner et orienter ladite tête de mesure optique dans un volume de travail, uni-, bi-ou tridimensionnel.

11. Tête de mesure optique selon les revendications 8 à 10, dans laquelle ledit localisateur est capable d'un ou plusieurs mouvements de rotation et/ou d'un ou plusieurs mouvements suivant des axes de translation.

12. Procédé pour mesurer les caractéristiques d'un objet comprenant l'utilisation d'une tête de mesure optique selon les revendications 5 à 11.
